# EUROPEAN PATENT APPLICATION

(11) **EP 0 707 992 A1**
(43) Date of publication of application: **24.04.1996**
(21) Application number: 95116273.4
(22) Date of filing: 16.10.1995
(51) Int. Cl.: B60H 1/34, F24F 13/065

(54) **Air vent for delivering and directing climate control air in motor vehicles**

(30) Priority: 20.10.1994 IT TO940204 U
(71) Applicant: FOGGINI PROGETTI S.r.l., I-10092 Beinasco Torino (IT)
(72) Inventor: Davico, Claudio, I-10094 Giaveno (Torino) (IT)
(74) Representative: Modiano, Guido, Dr.-Ing.

(57) **Abstract**

An air vent comprising a vent body (10) provided with a rotatable element (18) having a grilled portion (18a) for delivering the flow and at least one solid portion (18b) for blocking and regulating the flow. The rotatable body includes a row of movable vanes (22) for further orientating the flow.

## Description

The present invention relates to an air vent for delivering, regulating or blocking and directing climate-control air in motor vehicles.

It is known that conventional vents for delivering climate-control air have separate means adapted to block and regulate the flow and to direct it.

Typically, the blocking and regulation function is assigned to a butterfly valve and the orientation function is assigned to a grille with movable vanes; both can be actuated separately and are affected by respective actuation means.

This typical and widespread conventional configuration has the main drawback that it complicates the structure of the vent, which must be provided at least with kinematic elements for actuating from the outside the blocking and regulation valve, which is usually accommodated in a manifold lying upstream of the diffuser grille. This known relatively complicated structure is disadvantageous from the point of view of the production costs of the vents and restricts their installation, especially in cars and more generally in low-cost or utility vehicles.

The presence of selective controls for controlling and directing the flow is also disadvantageous in terms of ease in use, especially as regards the vents for delivering the lateral flows, which cannot always be easily reached by the vehicle driver.

A pricipal aim of the present invention is substantially to eliminate these and other drawbacks, and within the scope of this aim it has the important objects of significantly simplifying the structure of conventional vents, to the benefit of manufacturing and installation costs, and of facilitating adjustment operations, reducing them to the actuation of a single element that combines both the blocking-regulation function and the flow orientation function.

According to the invention, this aim, these objects, and others are achieved by a vent for delivering climate-control air having the features described in the appended claims.

These characteristics, as well as the purposes and advantages of the vent according to the invention, will become apparent from the following detailed description and with reference to the accompanying exemplifying drawings, wherein:

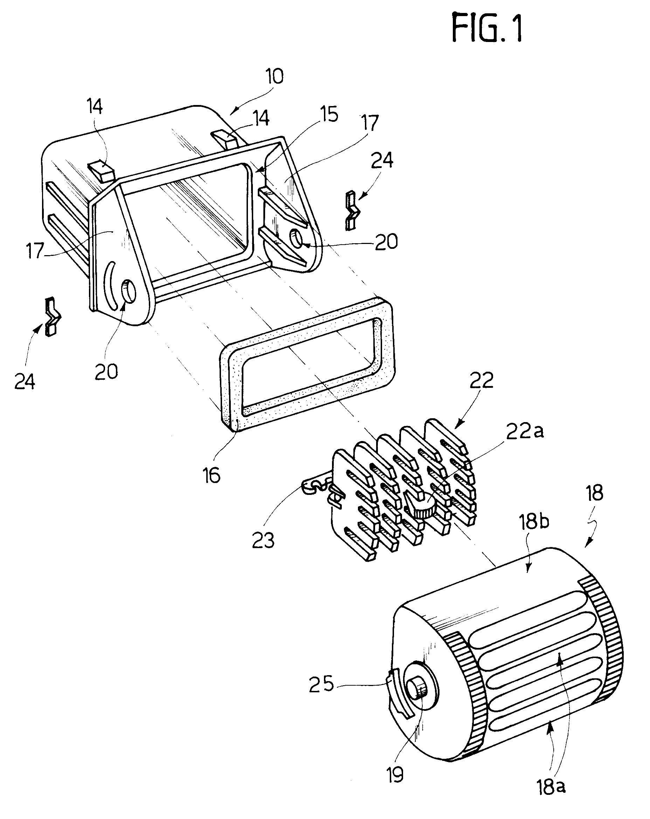

figure 1 is an exploded perspective view of the air vent;
figure 2 is a schematic axial sectional view of the air vent of figure 1, in the configuration for delivering the air flow;
figure 3 is a sectional view, similar to figure 2, illustrating the air vent in the configuration for blocking the air flow.

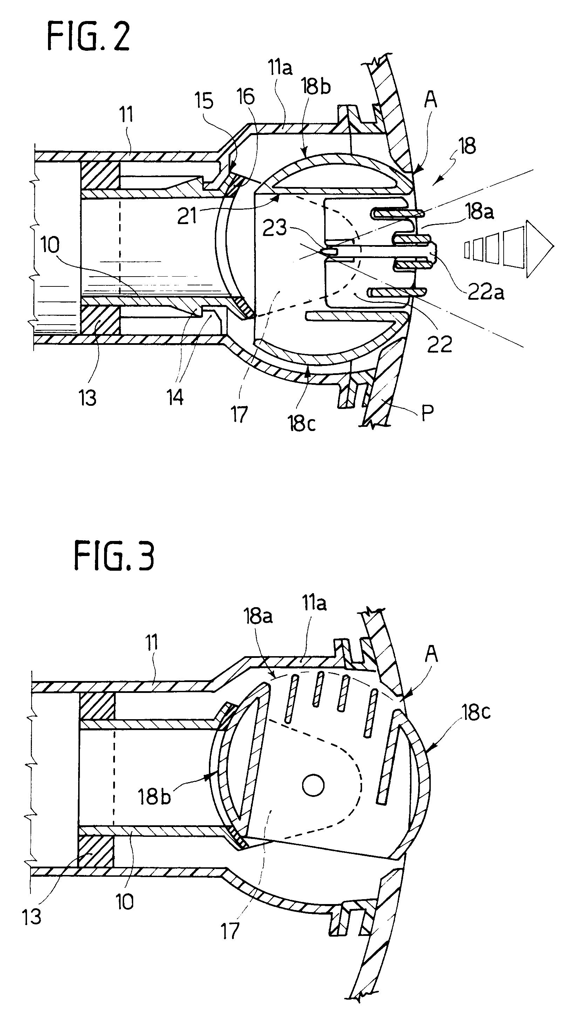

With reference to the figures, the reference numeral 10 designates the air vent body, which is constituted by a hollow parallelepiped-shaped element acting as a manifold for the air flow and adapted to be accommodated in the duct 11 for the delivery of said air (figure 2) with the interposition of a sealing and adapting gasket 13 and to be retained in said duct preferably by the action of snap-locking retention means 14.

An abutment 15 shaped like a cylindrical sector and two fork-shaped shoulders 17 are formed on the front part of the body 10; said abutment 15 is adapted to receive a gasket 16 made of spongy polymeric or elastomeric material, and said shoulders 17 are adapted to rotatably support a substantially cylindrical element 18 adapted to perform both the regulation-blocking function and the flow orientation function.

For this purpose, the element 18 is provided with pivots 19 that rotatably couple in corresponding holes 20 of the fork-shaped shoulders 17 and is also provided, on its front cylindrical wall, with a grilled portion 18a and with first and second solid portions 18b-18c; the grilled portion is formed by a plurality of adjacent slots that are parallel to the rotation axis of the rotatable element 18. A parallelepiped-shaped seat 21 is also formed inside the cylindrical element 18 and is adapted to contain a row of steerable vanes 22 that partially enter the slots of the grilled portion 18a of the element 18 and are mutually coupled, in a per se known manner, by a rake-shaped rod 23 to move in step together by rotating about a respective oscillation axis that lies at right angle to the rotation axis of the element 18. A knob 22a supported by the vane 22 that is arranged centrally with respect to the row protrudes beyond the central slot of the grilled portion 18a to allow to grip and orientate the row of vanes.

As clearly shown in figure 2, the portions 18b-18c of the cylindrical wall of the element 18 are constituted by cylindrical segments having different respective centers of curvature and radii of curvature, and in which the rotation axis of the element 18, which passes through the holes 20 of the fork-shaped shoulders 17, is in turn shifted with respect to the center of curvature of the abutment 15 shaped like a cylindrical segment.

In particular, the center of curvature of the solid portion 18b of the element 18 is chosen so as to coincide with the center of curvature of the cylindrical abutment 15, so that said portion 18b can couple to the abutment 15, deforming the gasket 16 so as to produce a seal, when the element 18 is rotated about the axis formed by the pivots 19.

Likewise, according to the invention, the element 18 can assume, due to a rotation applied thereto from the outside, two extreme positions: respectively, a maximum delivery position, shown in figure 2, and a full blocking position, shown in figure 3; these positions are separated by an angle that is at least equal to 90^{o}, and the intermediate positions of the element 18 are matched by respective degrees of flow reduction. The extreme blocking and, respectively, maximum-delivery positions are made elastically stable by a position-marking device that comprises cusp-shaped springs 24 cooperating with respective cams 25 of the element 18.

Figure 2 shows that in the maximum-delivery position the grilled portion 18a of the element 18 is aligned with an opening A that is provided in the dashboard P, whereas figure 3 shows that in the blocking position the two solid portions 18b-18c block respectively the opening surrounded by the cylindrical abutment 15 and said opening A, shielding it; in this position, the grilled portion 18a is contained and concealed inside the end portion 11a of the delivery duct 11.

The effects of the air vent according to the present invention of course also apply to vents that achieve equal utility by using the same innovative concept defined by the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An air vent for delivering and directing the climate-control air of motor vehicles, characterized in that it comprises a vent body (10) provided with a rotatable element (18) that has a grilled portion (18a) for delivering the flow and at least one solid portion (18b) for blocking and regulating said flow, and in that said rotatable element includes a row of movable vanes (22) for further orientating said flow.

2. An air vent according to claim 1, characterized in that the configuration for maximum delivery and the configuration for complete blocking of the flow are obtained for two extreme positions of the rotatable element (18) that are separated by an angle of at least 90^{o}, and in that the intermediate positions of the rotatable element are matched by respective degrees of flow reduction.

3. An air vent according to claim 1, characterized in that said rotatable element is supported by means of pivots (19) by two fork-shaped shoulders (17) of the vent body (10) which protrude from an abutment (15) that is shaped like a cylindrical segment, provided on said vent body (10) and having a sealing gasket (16), and in that the rotatable element (18) is adapted to engage said abutment (15) shaped like a cylindrical segment by arranging it adjacent to said abutment with one of its solid portions (18b) in order to block or reduce the flow of air, when said rotatable element is rotated from the delivery position towards the blocking position.

4. An air vent according to claim 1, characterized in that the solid portions (18b-18c) of the rotatable element (18) comprise two diametrically opposite solid portions (18b-18c), the profile whereof is shaped like an arc of a circle and the centers and radii of curvature whereof are different.

5. An air vent according to claim 3, characterized in that the rotation axis of the rotatable element (18) is shifted with respect to the center of curvature of the abutment (15) shaped like a cylindrical segment, and in that the center of curvature and the radius of curvature of said abutment (15) coincide with the center and radius of curvature of the solid portion (18b) of the rotatable element (18) that is adapted to engage said abutment (15) with the interposition of the sealing gasket (16).

6. An air vent according to claim 4, characterized in that the grilled portion (18a) of the rotatable element is aligned, in the maximum-delivery configuration, with an opening (A) formed in the dashboard (P) and is contained and concealed, in the full-blocking configuration, in the end of the air delivery duct (11); the opening (A) of the dashboard (P) being shielded, in said blocking position, by the second solid portion (18c) of the rotatable element (18).

7. An air vent according to claim 1, characterized in that the rotatable element (18) internally comprises a seat (21) shaped like a parallelepiped and adapted to contain the row of movable vanes (22) that partially enter the grilled portion (18a) of said element and are mutually rigidly coupled by a rake-like rod (23) to move together in step by rotating about respective oscillation axes that lie at right angle to the rotation axis of the rotatable element (18).

8. An air vent according to claim 1, characterized in that the grilled portion (18a) of the rotatable element (18) is formed by a plurality of adjacent parallel slots, and in that a knob (22a) for the orientation of the vanes (22) protrudes from one of said slots.
